# FASCICULE DE BREVET EUROPEEN

(11) **EP 3 120 292 B1**
(45) Date de publication et mention de la délivrance du brevet: **08.04.2020**
(21) Numéro de dépôt: 15721763.9
(22) Date de dépôt: 17.03.2015
(51) Int. Cl.: G06F 21/81, G06F 21/88

(54) **DISPOSITIF AUTONOME EN ÉNERGIE DOTÉ DE MOYENS D'AUTODESTRUCTION**
AUTONOME VORRICHTUNG HINSICHTLICH DER ENERGIE UND MIT VORRICHTUNG ZUR SELBSTZERSTÖRUNG
A DEVICE THAT IS AUTONOMOUS IN TERMS OF POWER AND EQUIPPED WITH MEANS FOR SELF-DESTRUCTING

(30) Priorité: 18.03.2014 FR 1400639
(43) Date de publication de la demande: 25.01.2017
(73) Titulaire: Commissariat à l'Énergie Atomique et aux Énergies Alternatives, 75015 Paris (FR)
(72) Inventeur: PICARD, Lionel, F-37170 Seyssinet-Pariset (FR); LEJOSNE, Johann, F-38260 La côte st André (FR); AZAÏS, Philippe, 38120 Saint-Egrève (FR); DESCARSIN, David, F-37510 Ballan (FR)
(74) Mandataire: Cabinet Beaumont
(86) Numéro de dépôt international: PCT/FR2015/050653
(87) Numéro de publication internationale: WO 2015/140465

(56) Documents cités:
- WO-A1-01/03100
- GB-A- 2 400 453
- US-A1- 2006 109 117

## Description

### Domaine technique de l'invention

L'invention est relative aux dispositifs autonomes en énergie dotés d'un circuit de commande alimenté par une source d'alimentation en énergie, et dont on provoque la destruction à l'aide de moyens d'autodestruction.

### État de la technique

Il peut être nécessaire de prévoir l'autodestruction de dispositifs autonomes en énergie dotés de systèmes de stockage d'énergie.

Par exemple, dans la vie de tous les jours, un utilisateur peut avoir besoin d'autodétruire un objet à distance s'il a été volé et qu'il contient des informations confidentielles. Cela est particulièrement vrai pour des objets de haute technologie, tels que des téléphones portables, des tablettes ou des ordinateurs portables, qui contiennent de nombreuses données personnelles ou professionnelles.

Dans un autre domaine d'application, il peut être utile d'activer l'explosion à distance d'un engin spatial en fin de vie pour limiter la quantité d'objets en orbite. Dans ce but, des charges explosives peuvent être embarquées, mais cela est très dangereux et peut conduire à une explosion intempestive de l'engin. Par ailleurs, plus sa masse est élevée, plus sa mise en orbite coûte cher. Il y a donc tout intérêt à éviter d'embarquer des objets superflus.

Le document US 2006/0109117 décrit un appareil et un procédé de désactivation d'un système multiétages intelligent.
Le document GB 2 400 453 décrit un système de protection à distance pour désactiver un équipement électrique.
Le document WO 01/03100 décrit un appareil et un procédé pour préserver du vol un équipement électronique.

### Objet de l'invention

Un objet de l'invention consiste à proposer un dispositif de masse réduite, autonome en énergie et qui puisse s'autodétruire sur commande.

A cet effet, le dispositif comporte un circuit de commande alimenté par une source d'alimentation en énergie, et des moyens d'autodestruction configurés pour détruire le dispositif par détérioration de la source d'alimentation en énergie.

Les moyens d'autodestruction peuvent comporter un programmateur configuré pour retarder la destruction du dispositif. Ils peuvent également être activés à distance au moyen d'un appareil de contrôle à distance.

Selon un premier mode de réalisation, les moyens d'autodestruction peuvent être configurés pour causer un court-circuit interne ou externe de la source d'alimentation en énergie.

De manière alternative, les moyens d'autodestruction peuvent être configurés pour provoquer la charge de la source d'alimentation en énergie au delà d'un seuil critique causant la détérioration de la source d'alimentation en énergie.

Par ailleurs, la source d'alimentation en énergie peut comporter un électrolyte organique, et les moyens d'autodestruction peuvent comporter au moins un élément chauffant configuré pour augmenter la température de l'électrolyte organique au delà de sa température d'emballement thermique.

Selon un mode de réalisation alternatif, les moyens d'autodestruction peuvent comporter un élément configuré pour déformer ou percer au moins une partie de la source d'alimentation en énergie.

L'invention se rapporte également à un procédé d'autodestruction comportant les étapes suivantes :
- fournir un dispositif autonome en énergie comportant un circuit de commande alimenté par une source d'alimentation en énergie, et des moyens d'autodestruction,
- activer les moyens d'autodestruction,
- détruire le dispositif par détérioration de la source d'alimentation en énergie.

### Description sommaire des dessins

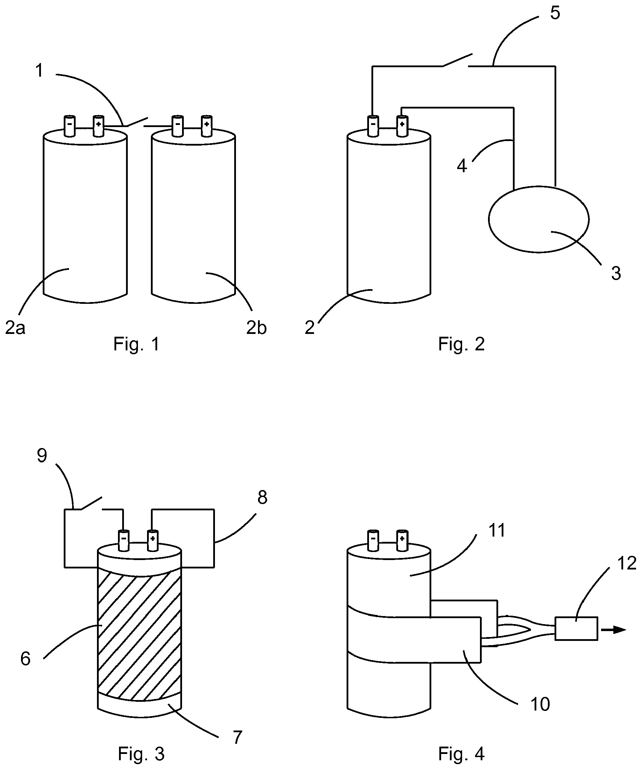

D'autres avantages et caractéristiques ressortiront plus clairement de la description qui va suivre de modes particuliers de réalisation de l'invention donnés à titre d'exemples non limitatifs et représentés aux dessins annexés, dans lesquels les figures 1 à 5 illustrent de façon schématique cinq modes de réalisation différents d'un dispositif autonome en énergie selon l'invention.

### Description détaillée

Un dispositif autonome en énergie est généralement muni d'une source d'alimentation en énergie configurée pour alimenter un circuit de commande et éventuellement d'autres organes. Les sources d'alimentation en énergie des dispositifs destinés par exemple au grand public ont des caractéristiques connues, en particulier en ce qui concerne leurs modes de défaillance, c'est-à-dire sous quelles conditions les sources d'alimentation en énergie peuvent être détériorées.

Un objet de l'invention est de tirer profit des modes de défaillance de la source d'alimentation en énergie pour détruire le dispositif. Ce dernier est considéré comme détruit lorsqu'il est devenu complètement inutilisable et/ou lorsque les données qu'il contient ne peuvent plus être récupérées. Le dispositif peut par exemple être détruit par explosion.

A cet effet, le dispositif est pourvu de moyens d'autodestruction configurés pour détériorer la source d'alimentation par des actions mécaniques et/ou thermiques, et/ou électriques. La source d'alimentation est alors utilisée comme élément destructeur d'au moins une partie du dispositif. La destruction de la source d'alimentation a pour objectif de détruire un autre élément du dispositif, par exemple un processeur, une mémoire, ou l'intégrité mécanique du dispositif afin de rendre le dispositif non fonctionnel même après remplacement de la batterie.

Les moyens d'autodestruction peuvent être activés à distance à l'aide d'un appareil de contrôle à distance, qui peut par exemple être connecté au dispositif au moyen d'éléments filaires ou connexion à distance.

Les moyens d'autodestruction peuvent être munis d'un programmateur pour permettre la programmation de l'horaire d'autodestruction. Cela est particulièrement utile pour que l'utilisateur ait le temps de s'éloigner du dispositif lorsque les moyens d'autodestruction ne sont pas activables à distance.

Selon un premier mode de réalisation, les moyens d'autodestruction sont configurés pour causer un court circuit de la source d'alimentation en énergie.

Selon la configuration illustrée à la figure 1, les moyens d'autodestruction peuvent comporter par exemple un interrupteur 1 connecté à un pôle + d'un premier accumulateur 2a et à un pôle - d'un deuxième accumulateur 2b, les deux accumulateurs 2a et 2b faisant partie de la source d'alimentation en énergie. Pour détruire le dispositif, un utilisateur active les moyens d'autodestruction, connecte les accumulateurs 2a et 2b en série en fermant l'interrupteur 1, et réalise un court-circuit local dans la source d'alimentation en énergie.

D'autres manières de réaliser un court-circuit dans la source d'alimentation en énergie peuvent être envisagées. Le court-circuit peut être réalisé de façon globale, par exemple en utilisant des moyens d'autodestruction comprenant une plaque conductrice pouvant être posée sur l'ensemble des pôles constituant la source d'alimentation en énergie (mode de réalisation non représenté).

De manière alternative, les moyens d'autodestruction peuvent comporter un liquide conducteur maintenu dans un réservoir lorsque le dispositif fonctionne normalement. Ce liquide conducteur peut par exemple être un liquide métallique tel que du Galinstan (alliage de Ga, In et Sn comprenant de préférence 68,5% de gallium, 21,5% d'Indium et 10% d'étain), du NaK₂ ou du mercure. Il peut également être choisi parmi la famille des peroxydes, de manière à réagir avec l'électrolyte de la source d'alimentation en énergie selon une réaction exothermique. Lorsque les moyens d'autodestruction sont activés, le réservoir est vidé à l'intérieur de la source d'alimentation en énergie, ce qui a pour effet de connecter les pôles et de causer un court-circuit.

Un court-circuit peut également être réalisé par fusion des parties isolantes de la source d'alimentation en énergie, de manière à mettre en contact les parties conductrices de la source d'alimentation en énergie. Pour cela, les moyens d'autodestruction peuvent par exemple comporter un élément chauffant tel qu'un fil conducteur alimenté par une source d'énergie secondaire, ce fil étant positionné pour chauffer les parties isolantes de la source d'alimentation en énergie lorsque les moyens d'autodestruction sont activés. Dans ce mode de réalisation, l'autodestruction du dispositif est réalisée plus ou moins rapidement en fonction de la capacité de l'élément chauffant à chauffer rapidement, c'est-à-dire en fonction de la puissance de la source d'énergie secondaire ou principale.

Une autre approche utilisant un mode de défaillance électrique de la source d'alimentation en énergie peut consister à charger la source d'alimentation en énergie au delà d'un seuil critique.

Selon le mode de réalisation présenté à la figure 2, la charge de la source d'alimentation en énergie 2 au delà de sa capacité nominale peut être réalisée à l'aide de moyens d'autodestruction comportant une source d'énergie secondaire 3, des liaisons électriques 4 et un interrupteur 5.

Lorsqu'un utilisateur active les moyens d'autodestruction, il provoque la fermeture de l'interrupteur 5 et l'énergie délivrée par la source d'énergie secondaire 3 est alors transmise à la source d'alimentation en énergie 2. Cette dernière dépasse sa capacité nominale d'autant plus vite que la source d'énergie secondaire 3 délivre une puissance élevée.

La source d'énergie secondaire 3 peut par exemple être une batterie Li-ion, une pile thermique, une capacité, etc. La source d'énergie secondaire 3 peut également comprendre un système de conversion d'énergie mécanique en énergie électrique. Par exemple, on peut envisager d'utiliser l'énergie éolienne pour charger la source d'alimentation en énergie au delà de sa capacité nominale. A titre d'exemple, si le dispositif est apte à voler, et qu'il est en vol lorsqu'on veut le détruire, une partie du flux d'air est capté pour alimenter un moyen de conversion de l'énergie mécanique en énergie électrique.

Selon une alternative de réalisation, les moyens d'autodestruction peuvent comprendre un algorithme de commande basé sur l'activation de relais ou de montages mécaniques configurés pour modifier les connexions électriques dans la source d'alimentation en énergie, et provoquer l'augmentation de sa charge au delà d'un seuil critique ou générer un court-circuit.

Pour entraîner la défaillance de la source d'alimentation en énergie, il est également possible de jouer sur ses propriétés thermiques.

Lorsque la source d'alimentation en énergie comporte un électrolyte organique tel que du Li-ion ou du Li-primaire, il peut être utile de tirer profit de l'instabilité de ces matériaux pour provoquer l'emballement thermique de la source d'alimentation et sa destruction. L'autodestruction du dispositif est alors réalisée par immersion dans l'électrolyte organique d'au moins une partie de la mémoire et /ou du circuit de commande.

L'électrolyte organique peut par exemple être choisi dans la famille des carbonates de nitrile, des lactones, des aminés, des amides, des éther-oxydes. Il peut également comprendre un mélange des composés précités. L'électrolyte organique est caractérisé par une température d'emballement thermique et une énergie spécifique à chaque matériau.

Selon le mode de réalisation illustré à la figure 3, les moyens d'autodestruction comportent un élément chauffant 6 tel qu'un élément thermo-résistif entourant un accumulateur 7 appartenant à la source d'alimentation en énergie. L'élément chauffant 6 et l'accumulateur 7 sont reliés par des liaisons électriques 8 et un interrupteur 9. Ainsi, lorsque les moyens d'autodestruction sont activés, l'interrupteur 9 est placé en position fermée et l'accumulateur 7 fournit de l'énergie à l'élément chauffant 6 jusqu'à ce que l'électrolyte contenu dans l'accumulateur 7 dépasse sa température d'emballement thermique, occasionnant la détérioration de la source d'alimentation en énergie.

De manière alternative, un élément chauffant peut être placé autour de chaque accumulateur composant la source d'alimentation en énergie. Il peut également être envisagé d'utiliser une source d'énergie secondaire pour alimenter électriquement le ou les éléments chauffants. Selon une alternative de réalisation, l'élément chauffant peut recevoir de l'énergie par induction. Le dispositif peut également être réalisé de manière à ce que l'élément chauffant soit logé directement à l'intérieur de la source d'alimentation en énergie.

Pour provoquer la destruction du dispositif, la source d'alimentation en énergie peut aussi être détériorée par une déformation mécanique telle qu'une compression ou un étirement. Une déformation mécanique peut être réalisée sur tout type de source d'alimentation en énergie.

A titre d'exemple illustré à la figure 4, les moyens d'autodestruction peuvent comprendre un fil ou un ruban 10 placé autour d'au moins un accumulateur 11 appartenant à la source d'alimentation en énergie. Les moyens d'autodestruction comportent également un moteur 12 apte à tirer sur le fil ou le ruban 10, le moteur étant alimenté par une source d'énergie secondaire.

Lorsque les moyens d'autodestruction sont activés, le moteur 12 exerce une force de traction sur le fil ou le ruban 10 au point de déformer l'accumulateur 11 et de le rendre inutilisable.

Le moteur 12 peut par exemple être remplacé par des moyens de rappel tel qu'un ressort, de sorte qu'en cas de choc, les moyens de rappel exercent une traction suffisante sur le fil ou le ruban 10 pour déformer l'accumulateur 11.

Une déformation de 10 à 20% du volume de la source d'alimentation en énergie permet de provoquer son explosion. En général, une déformation de 15% du volume de la source d'alimentation est suffisante.

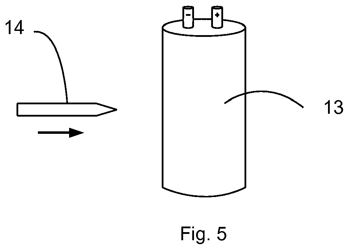

Une alternative à la déformation mécanique peut être de percer au moins une partie de la source d'alimentation en énergie de manière à réaliser un court-circuit interne. Par exemple, selon le mode de réalisation illustré à la figure 5, la source d'alimentation en énergie comprend un accumulateur 13 pouvant être percé par un objet 14. Ce mode de réalisation peut être combiné au mode de réalisation représenté à la figure 4, par exemple en fixant l'objet 14 au ruban 10. De cette façon, quand les moyens d'autodestruction sont activés, le moteur 12 tire sur l'objet 14, et ce dernier transperce l'accumulateur.

L'objet 14 peut être embarqué spécifiquement pour percer l'accumulateur en cas d'autodestruction. Il peut avoir aussi une fonction lors de l'utilisation du dispositif et être détourné de son utilisation première si les moyens d'autodestruction sont activés.

Selon un mode de réalisation particulier, l'objet 14 est conducteur pour permettre d'une part le perçage de l'accumulateur, et d'autre part le court-circuit de la source d'alimentation en énergie. L'objet 14 peut aussi être suffisamment long pour pouvoir percer plusieurs accumulateurs de la source d'alimentation en énergie lorsque ceux-ci sont positionnés à proximité les uns des autres.

L'intérêt de réaliser une déformation mécanique d'au moins une partie de la source d'alimentation en énergie est de provoquer la fuite de l'électrolyte pour rendre le dispositif inutilisable. Pour cela, les accumulateurs peuvent comprendre une zone facilement sécable destinée à faciliter l'autodestruction du dispositif.

La présente invention ne se limite pas aux caractéristiques qui viennent d'être mentionnées. Des moyens d'autodestruction électriques, mécaniques et thermiques peuvent être combinés. Dans le cas où plusieurs accumulateurs font partie de la source d'alimentation en énergie, il est possible de réaliser un court circuit sur un premier groupe d'accumulateurs, une déformation mécanique sur un deuxième groupe d'accumulateurs, et une surchauffe d'un troisième groupe d'accumulateurs.

On peut également prévoir de laisser le choix du mode de défaillance à l'utilisateur. Dans ce cas, les moyens d'autodestruction peuvent comporter différents éléments afin de détériorer la source d'alimentation en énergie par une action mécanique et/ou électrique et ou thermique. Un algorithme de sélection permet alors à l'utilisateur de choisir parmi les différents modes de défaillance. Cette configuration peut être utile notamment lorsque l'énergie disponible pour réaliser l'autodestruction est faible. Afin de s'assurer que le dispositif sera détruit, l'utilisateur peut donc choisir le mode d'autodestruction le moins coûteux en énergie.

## Revendications

1. Dispositif autonome en énergie comportant :
un circuit de commande ;
une source d'alimentation en énergie (2, 7, 11) ; et
des moyens d'autodestruction,
le dispositif étant **caractérisé en ce que**:
les moyens d'autodestruction comportant un élément chauffant (6) configuré pour augmenter la température et provoquer l'emballement thermique de la source d'alimentation en énergie et détruire le dispositif par détérioration de la source d'alimentation en énergie.

2. Dispositif selon la revendication 1, dans lequel l'élément chauffant (6) reçoit de l'énergie par induction.

3. Dispositif selon la revendication 1 ou 2, dans lequel les moyens d'autodestruction comportent un programmateur configuré pour retarder la destruction du dispositif.

4. Dispositif selon l'une quelconque des revendications 1 à 3, dans lequel les moyens d'autodestruction sont activables à distance au moyen d'un appareil de contrôle à distance.

5. Dispositif selon l'une quelconque des revendications 1 à 4, dans lequel la source d'alimentation en énergie (2, 7, 11) comporte un électrolyte organique, et dans lequel l'élément chauffant (6) est configuré pour augmenter la température de l'électrolyte organique et provoquer l'emballement thermique de la source d'alimentation en énergie.

6. Dispositif selon la revendication 5, dans lequel l'autodestruction du dispositif est réalisée par immersion dans l'électrolyte d'au moins une partie d'une mémoire que comporte le dispositif ou du circuit de commande.

7. Dispositif selon l'une quelconque des revendications 1 à 6, dans lequel l'élément chauffant (6) est un élément thermo-résistif entourant la source d'alimentation en énergie (2, 7, 11).

8. Procédé d'autodestruction comportant les étapes suivantes :
• fournir un dispositif autonome en énergie comportant un circuit de commande alimenté par une source d'alimentation en énergie (2, 7, 11), et des moyens d'autodestruction comportant un élément chauffant (6),
• activer les moyens d'autodestruction,
le procédé étant **caractérisé en ce qu'**il comporte l'étape suivante:
• détruire le dispositif par augmentation de la température et provoquer l'emballement thermique et la détérioration de la source d'alimentation en énergie.

9. Procédé selon la revendication 8, dans lequel l'élément chauffant (6) reçoit de l'énergie par induction.

10. Procédé d'autodestruction selon la revendication 8 ou 9, dans lequel l'étape d'activation des moyens d'autodestruction est retardée par un programmateur.

11. Procédé d'autodestruction selon l'une quelconque des revendications 8 à 10, dans lequel l'étape d'activation des moyens d'autodestruction est réalisée à distance au moyen d'un appareil de contrôle à distance.

12. Procédé d'autodestruction selon l'une quelconque des revendications 8 à 11, dans lequel le système de stockage de l'énergie comporte un électrolyte organique, et dans lequel la destruction du dispositif est réalisée par chauffage de l'électrolyte organique de sorte à provoquer l'emballement thermique de la source d'alimentation en énergie (2, 7, 11).

13. Procédé selon la revendication 12, dans lequel l'autodestruction du dispositif est réalisée par immersion dans l'électrolyte d'au moins une partie d'une mémoire que comporte le dispositif ou du circuit de commande.

14. Procédé d'autodestruction selon l'une quelconque des revendication 8 à 13, dans lequel l'élément chauffant (6) est un élément thermo-résistif entourant la source d'alimentation en énergie (2, 7, 11).

## Patentansprüche

1. Ein Gerät mit eigener Stromversorgung, das Folgendes aufweist:
eine Steuerschaltung;
eine Stromversorgungsquelle (2, 7, 11); und
Selbstzerstörungsmittel,
**dadurch gekennzeichnet, dass**
die Selbstzerstörungsmittel ein Heizelement (6) aufweisen, das konfiguriert ist zum Erhöhen der Temperatur und zum Bewirken eines thermischen Durchgehens der Stromversorgungsquelle, um die Vorrichtung durch Beschädigung der Stromversorgungsquelle zu zerstören.

2. Vorrichtung nach Anspruch 1, wobei das Heizelement (6) durch Induktion Leistung erhält.

3. Vorrichtung nach Anspruch 1 oder 2, wobei die Selbstzerstörungsmittel einen programmierbaren Zeitgeber aufweisen, der konfiguriert ist zum Verzögern der Zerstörung der Vorrichtung.

4. Vorrichtung nach einem der Ansprüche 1 bis 3, wobei die Selbstzerstörungsmittel mittels eines Fernsteuerungssystems ferngesteuert aktiviert werden können.

5. Vorrichtung nach einem der Ansprüche 1 bis 4, wobei die Stromversorgungsquelle (2, 7, 11) einen organischen Elektrolyten aufweist und wobei das Heizelement (6) konfiguriert ist zum Erhöhen der Temperatur des organischen Elektrolyten und zum Bewirken des thermischen Durchgehens der Stromversorgungsquelle.

6. Vorrichtung nach Anspruch 5, wobei die Selbstzerstörung der Vorrichtung durch Eintauchen wenigstens eines Teils eines Speichers der Vorrichtung oder der Steuerschaltung in den Elektrolyten erreicht wird.

7. Vorrichtung nach einem der Ansprüche 1 bis 6, wobei das Heizelement (6) ein die Stromversorgungsquelle (2, 7, 11) umgebendes thermoresistives Element ist.

8. Ein Selbstzerstörungsverfahren, das die folgenden Schritte aufweist:
- Bereitstellen eines Geräts mit eigener Stromversorgung, die eine von einer Stromversorgungsquelle (2, 7, 11) gespeiste Steuerschaltung und Selbstzerstörungsmittel mit einem Heizelement (6) aufweist,
- Aktivieren der Selbstzerstörungsmittel,
wobei das Verfahren **dadurch gekennzeichnet ist, dass** es den folgenden Schritt aufweist:
- Zerstören des Geräts durch Erhöhen der Temperatur und Bewirken eines thermischen Durchgehens sowie Beschädigen der Stromversorgungsquelle.

9. Verfahren nach Anspruch 8, wobei das Heizelement (6) durch Induktion mit Strom versorgt wird.

10. Selbstzerstörungsverfahren nach Anspruch 8 oder 9, wobei der Aktivierungsschritt der Selbstzerstörungsmittel durch einen programmierbaren Zeitgeber verzögert wird.

11. Selbstzerstörungsverfahren nach einem der Ansprüche 8 bis 10, wobei der Aktivierungsschritt der Selbstzerstörungsmittel mittels eines Fernsteuerungssystems aus der Ferne durchgeführt wird.

12. Selbstzerstörungsverfahren nach einem der Ansprüche 8 bis 11, wobei das Energiespeichersystem einen organischen Elektrolyten aufweist und die Zerstörung der Vorrichtung durch Erhitzen des organischen Elektrolyten erfolgt, um das thermische Durchgehen der Stromversorgungsquelle (2, 7, 11) zu bewirken.

13. Selbstzerstörungsverfahren nach Anspruch 12, wobei die Selbstzerstörung des Geräts durch Eintauchen wenigstens eines Teils eines Speichers des Geräts oder des Steuerkreises in den Elektrolyten durchgeführt wird.

14. Selbstzerstörungsverfahren nach einem der Ansprüche 8 bis 13, wobei das Heizelement (6) ein die Stromversorgungsquelle (2, 7, 11) umgebendes thermoresistives Element ist.

## Claims

1. A self-powered device comprising:
a control circuit;
a power supply source (2, 7, 11); and
self-destruction means,
the device being **characterized in that**:
The self-destruction means comprise a heating element (6) configured to increase the temperature and to cause thermal runaway of the power supply source to destroy the device by impairing the power supply source.

2. The device of claim 1, wherein the heating element (6) receives power by induction.

3. The device of claim 1 or 2, wherein the self-destruction means comprise a programmer configured to delay the destruction of the device.

4. The device of anyone of claims 1 to 3, wherein the self-destruction means are able to be remotely activated by means of a remote control system.

5. The device of any one of claims 1 to 4, wherein the power supply source (2, 7, 11) comprises an organic electrolyte, and wherein the heating element (6) is configured to increase the temperature of the organic electrolyte and to cause the thermal runaway of the power supply source.

6. The device of claim 5, wherein the self-destruction of the device is performed by immersing at least a part of a memory of the device or of the control circuit in the electrolyte.

7. The device of any one of claims 1 to 6, wherein the heating element (6) is a thermo-resistive element surrounding the power supply source (2, 7, 11).

8. A self-destruction method comprising the following steps:
• providing a self-powered device comprising a control circuit supplied by a power supply source (2, 7, 11), and self-destruction means comprising a heating element (6),
• activating the self-destruction means,
the method being **characterized in that** it comprises the following step:
• destroying the device by increasing the temperature and causing the thermal runaway and the impairing of the power supply source.

9. The method of claim 8, wherein the heating element (6) receives power by induction.

10. The self-destruction method of claim 8 or 9, wherein the activation step of the self-destruction means is delayed by a programmer.

11. The self-destruction method of anyone of claims 8 to 10, wherein the activation step of the self-destruction means is performed remotely by means of a remote control system.

12. The self-destruction method of anyone of claims 8 to 11, wherein the energy storage system comprises an organic electrolyte, and wherein the destruction of the device is performed by heating the organic electrolyte so as to cause the thermal runaway of the power supply source (2, 7, 11).

13. The self-destruction method of claim 12, wherein the self-destruction of the device is performed by immersing at least a part of a memory of the device or of the control circuit in the electrolyte.

14. The self-destruction method of anyone of claims 8 to 13, wherein the heating element (6) is a thermo-resistive element surrounding the power supply source (2, 7, 11).
